Europäisches Patentamt

European Patent Office

Office européen des brevets

(19)

(11) Veröffentlichungsnummer: **0 148 305**
**A1**

(12) ## EUROPÄISCHE PATENTANMELDUNG

(21) Anmeldenummer: 84101283.4

(22) Anmeldetag: 08.02.84

(51) Int. Cl.⁴: **B 60 G 5/00**

(30) Priorität: 07.01.84 DE 8400265 U

(43) Veröffentlichungstag der Anmeldung: 17.07.85
Patentblatt 85/29

(84) Benannte Vertragsstaaten: **DE FR GB IT**

(71) Anmelder: **Matzen & Timm, Grosse Bahnstrasse 11-25,
D-2000 Hamburg 54 (DE)**

(72) Erfinder: **Matzen, Günther A. F., Grosse
Bahnstrasse 11-25, D-2000 Hamburg 54 (DE)**

(74) Vertreter: **Schöning, Hans-Werner, Dipl.-Ing.,
RECHTSANWÄLTE Dr. Harmsen, Dr. Utescher
Dipl.-Chem Harmsen, Bartholatus Dr. Schaeffer, Dr.
Fricke PATENTANWÄLTE Dr. Siewers, Dipl.-Ing.
Schöning Adenauerallee 28, D-2000 Hamburg 1 (DE)**

(54) **Dreiachsaggregat für Anhänger und Sattelauflieger.**

(57) Um bei ungelenkten Dreiachsaggregaten nicht angetriebener Fahrzeugachsen für Anhänger und Sattelauflieger, bei denen die vor bzw. hinter den Laufachsen angeordneten, zur Abstützung des Chassis vorgesehenen Anflanschböcke von mit den Fahrachsen verbundenen Federarmen getragen werden; weniger Torsionskraft zum Fahrzeugrahmen zu übertragen, werden gemäß der Erfindung anstelle der bisher verwendeten acht Anflanschböcke zwischen der mittleren Laufachse und den beiden endständigen Laufachsen zwei Paare von Anflanschböcken vorgesehen, wobei die Anflanschböcke im Mittelteil von zweiarmigen Federungsanordnungen gelenkig abgestützt sind und die Enden der Federarme mit den benachbarten Laufachsen in Verbindung stehen.

EP 0 148 305 A1

18. Januar 1984
Pt 1/84 sg 8

## Dreiachsaggregat für Anhänger
## und Sattelauflieger.

Die Erfindung betrifft ein ungelenktes Dreiachsaggregat nicht angetriebener Fahrzeugachsen für Anhänger und Sattelauflieger, bei dem die vor bzw. hinter den Fahrachsen angeordneten, zur Abstützung des Chassis vorgesehenen Anflanschböcke von mit den Fahrachsen verbundenen Federarmen getragen werden.

Dreiachsaggregate bekannter Konstruktionen sind dergestalt angeordnet, daß jede der drei Laufachsen unter eine Blattfeder mittig eingebunden ist und die Blattfederenden vorn und hinten offen ihre Gleitauflage im Federschuh bzw. in der Ausgleichswiege finden.

Diese Kontruktion bedingt, daß die Verbindung zum Fahrzeugchassis über insgesamt acht Anflanschpunkte hergestellt wird.

Bei Einsätzen mit unkontrollierter Überladung, zum Beispiel bei Kippern oder im Überseetransportgeschäft, vor allem in unwegsamen Geländeverhältnissen wird der Fahrzeugrahmen erfahrungsgemäß erheblichen Verwindungen ausgesetzt, die sich voll auf die acht Anflanschpunkte des Dreiachsaggregates über-

2

tragen und hier zu Brüchen führen können. Bei unebenen Bodenverhältnissen ist auch der Pendelausgleich der Laufachsen
gegeneinander stark beschränkt, da für den Ausgleich nur der
Pendelweg der Ausgleichswiege und der Durchfederweg der Blattfedern selbst zur Verfügung steht. Nachteilig ist beim harten
Einsatz solcher Dreiachsaggregate auch, daß im allgemeinen
bisher die Einspurung und Halterung der Achsen nur über
verstellbare Spurstangen erfolgte, da die Federn selbst in den
Federschuhen und Ausgleichswiegen nur als Scheuerauflage wirken
und keine feste Verbindung mit dem Federschuh oder der Ausgleichswiege haben. Dreiachsaggregate in ungelenkter Ausführung
unterliegen bei enger Kurvenfahrt auch noch zusätzlichen
Torsionsbelastungen, die ausschließlich durch die Federschuhe
aufgefangen werden müssen.

Aufgabe der Erfindung ist die Schaffung eines verbesserten
Dreiachsaggregates der einleitend genannten Art, mittels welchem
auf den Fahrzeugrahmen besonders bei unebenem Terrain erheblich
weniger Torsionskräfte übertragen werden und bei Kurvenfahrt
geringere Belastungen an den Anflanschungen entstehen als dieses
bei den herkömmlichen Dreiachsaggregaten mit ihren acht Anflanschpunkten und offener Federlagerung der Fall ist, so daß im Endeffekt
das mit diesem Dreiachsaggregat versehene Fahrzeug eine erheblich
größere Lebensdauer erhält und sich durch eine erhöhte Betriebssicherheit auszeichnet.

Zur Lösung der vorgenannten Aufgabe wird erfindungsgemäß vorgeschlagen, bei dem Dreiachsaggregat der einleitend genannten Art
zwischen der mittleren Laufachse und den beiden endständigen
Laufachsen zwei Paare von Anflanschböcken verzusehen, die

0148305

3

Anflanschböcke im Mittelteil mit zweiarmigen Federungsanordnungen gelenkig abzustützen und die Enden der Federarme
mit den benachbarten Laufachsen zu verbinden.

Dabei sind vorzugsweise als Federanordnungen asymmetrisch
ausgebildete Blattfederpakete vorgesehen, deren entsprechend
einem Längenverhältnis von 2:1 bemessenen Federarme an den Enden
so verbunden, daß die kurzen Federarme den endständigen Laufachsen und die längeren Federarme der mittleren Laufachse
zugewandt sind.

Die erfindungsgemäße Konstruktion des Dreiachsaggregates benötigt
somit anstelle der bisher erforderlichen acht Befestigungspunkten zum Chassis jetzt nur noch vier Befestigungspunkte, die
paarweise durch starke Quertraversen zu je einer Blockeinheit
verbunden werden können, um für eine optimale Querstabilisierung
zu sorgen und dabei gleichzeitig, bedingt durch die drehbare
Lagerung der zweiarmigen Federanordnungen in den Anflanschböcken,
einen höchstmöglichen Pendelausschlag der Achsen bei schwerem
Gelände erreichen. Ein weiterer Vorteil ergibt sich dadurch,
daß der Abstand der zwei Anflanschböcke zueinander wesentlich
kürzer ist als der Abstand zwischen den äußeren der acht Anflanschböcke herkömmlicher Dreiachsaggregate. In gleicher
Größenordnung vermindern sich dann auch die Torsionsbewegungen
und somit Bruchbelastungen am Chassis.

Weitere Einzelheiten und Merkmale der Erfindung ergeben sich aus
den Unteransprüchen.

Nachfolgend wird anhand der beigefügten Zeichnungen ein bevorzugtes Ausführungsbeispiel eines erfindungsgemäßen Dreiachsaggregates näher beschrieben.

4

In den Zeichnungen zeigen:

Fig. 1  eine Draufsicht auf das erfindungsgemäße
Dreiachsaggregat,

Fig. 2  einen vertikalen Längsschnitt gemäß der Schnittlinie II-II der Fig. 1 und

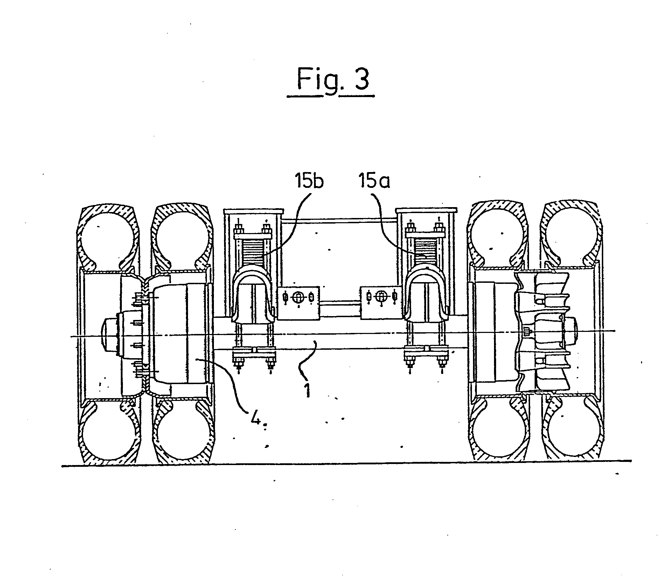

Fig. 3  einen vertikalen Querschnitt gemäß den Schnittlinien III-III der Figuren 1 und 2.

Die drei Laufachsen 1, 2 und 3 sind an ihren Enden in üblicher Weise mit Radnaben 4 versehen, an denen in üblicher Weise Räder in Zwillingsbereifungsanordnung angebracht werden können.

Da die Radnaben, die Bereifungen und Bremsanordnungen kein Teil der vorliegenden Erfindung sind, wird hierauf nicht näher eingegangen. Es darf daher davon ausgegangen werden, daß die vorerwähnten Teile in üblicher Weise ausgebildet sind.

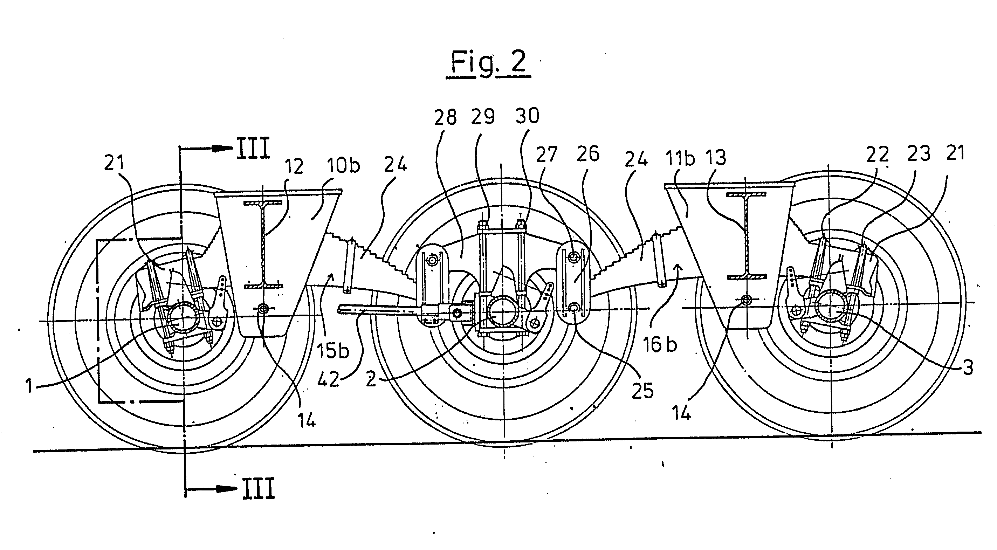

Zwischen der mittleren Laufachse 2 und den endständigen Laufachsen 1 und 3 befinden sich zwei Paare von Anflanschböcken 10a, 10b bzw. 11a, 11b. Diese Anflanschböcke dienen zur Befestigung am Fahrzeugchassis, das in den Zeichnungen nicht dargestellt ist. Zur Querstabilisierung sind die gegenüber liegenden Anflanschböcke 10a, 10b bzw. 11a, 11b mit starken, als T-Träger ausgebildeten Traversen 12 bzw. 13 verbunden. Wie in Fig.2 schematisch bei 14 angedeutet, sind die Paare von Anflanschböcken drehbeweglich mit Federpaketen 15a, 15b bzw. 16a, 16b verbunden. Das Besondere bei diesen Blattfederpaketen 15 und 16 oder anderen Federarmkonstruktionen ist, daß sie asymmetrisch ausgebildet sind. Bezogen auf den mittleren Drehpunkt 14 ist der der mittleren Laufachse 2 zugewandte Federarm im wesentlichen doppelt so lang wie der den endständigen Laufachsen 1, 3 zugewandte Federarm.

5

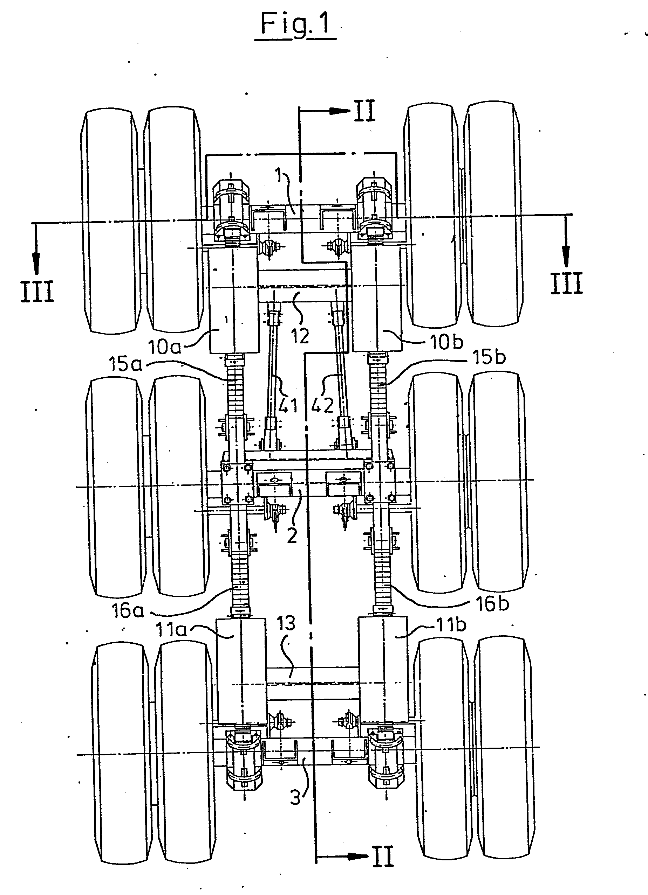

Da beim dargestellten Ausführungsbeispiel sämtliche Blattfederpakete 15a, 15b, 16a, 16b untereinander gleich und auch in
gleicher Weise angeschlossen sind, wird im nachfolgenden allein
auf die Feder 16b Bezug genommen, die in Fig. 1 rechts unten
und in Fig. 2 rechts außen dargestellt ist.

Das Federpaket ist mit seinem kurzen Arm 21 mittels Spanngehäuse
und Spannbügeln 22 und 23 an der Laufachse 3 befestigt. Zentral
entsprechend dem Längenverhältnis 2:1 der Federarme sind die
Federn drehbar im Anflanschbock 11b eingespannt. Der längere
Federarm 24 ist an seinem freien Ende mit einem nicht näher
dargestellten Lagerauge verbunden. Dieses Lagerauge greift
drehbar im Gelenkpunkt 25 in ein Federgehänge 26 ein, dessen
zweiter Anlenkungspunkt 27 an dem Außenende einer T-förmigen
Traverse 28 gleichfalls drehbar angeschlossen ist. Diese Traverse
28 wird von der mittleren Laufachse 2 getragen. Die Befestigung
der Traverse 28 ist auch hier mit Spannbügeln 29 und 30 vorgenommen.

Wie die vorstehende Beschreibung erkennen läßt, besteht nunmehr
eine gelenkige Verbindung von der Laufachse 1 über ein drehbar
im Anflanschbock gelagertes Blattfederpaket zum Federgehänge 26
und weiter über die Traverse 28 zur mittleren Laufachse 2. In
gleicher Weise steht auch die andere Laufachse 3 über ein Federpaket, ein Federgehänge 26 und die andere Hälfte der Traverse 28
mit der mittleren Laufachse 2 in Verbindung.

Der weiche Fahrausgleich aller drei Laufachsen untereinander
erfolgt weiter dadurch, daß die Traverse 28 gegen die unterschiedlichen Federarmdrücke, hervorgerufen durch unterschiedliche Niveauhöhen, die die Laufachsen überfahren, verkippt und so ständig
gleiche Belastungen an den Federarmen der vorderen und hinteren
Feder erzeugt.

0148305

6

In Verbindung mit der Traverse 28 ist noch darauf hinzuweisen, daß diese mit ihren Lagerbuchsen beidseitig im gleichen Abstand symmetrisch von der Mittellinie der mittleren Laufachse angeordnet ist.

Die mittlere Laufachse 2 ist, wie vor allem aus Fig. 1 zu ersehen, über trapezförmig angestellte, an den Enden gelenkig angeschlossene Spurstangen 41 und 42 mit der Traverse 12 zwischen den beiden Lagerböcken 10a und 10b verbunden. Durch diese Form der Spurstangen erfolgt zwangsläufig eine genaue einstellbare Spurführung und eine Arretierung der genauen Fahrspur auch in seitlicher Richtung - Deichseleffekt - zusätzlich zu der bereits bestehenden seitlichen Führung mittels der Gelenklager-Verbindung zwischen den Federaugen am langen Arm der Blattfederpakete und der mit der mittleren Laufachse verbundenen Traverse 28.

Dadurch, daß die Blattfederpakete mit Bezug auf den Herzbolzen der Feder im Drehmittelpunkt des Anflanschbockes im Längenverhältnis 2:1 zur mittleren bzw. zur vorderen und hinteren Laufachse ausladen, können alle Achsen des Dreiachsaggregats die gleiche Nutzlast aufnehmen. Bei den Federn sind nicht nur die ausladenden Federenden unterschiedlich lang, sondern es ist auch der Federaufbau asymmetrisch, um unterschiedlichen Hebelarmkräften gerecht zu werden.

Zum leichteren Verständnis der Kraftübertragung auf die Federn soll als Beispiel davon ausgegangen werden, daß das Dreiachsaggregat mit seinen drei Achsen jeweils 16 t, d.h. insgesamt

7

48 t, aufnehmen soll.

Zur Abfederung werden verwendet vier Federn von je 12 t
Kapazität = 48 t.

Da die Federn im Anflanschbock im Längenverhältnis 2:1 eingespannt sind, geben dieselben 2/3 ihrer Tragkraft am kuren Ende
und 1/3 ihrer Tragkraft am langen-Ende ab. Somit entspricht
die Federkraftabgabe der 12 t Federn an der Vorderachse zweimal
der kurzen Federarmlänge von 8 t aus 12 t = 16 t. An der
mittleren Laufachse entspricht die Federkraftabgabe viermal
dem langen Federarmende von 4 t aus 12 t = 16 t. Bei der hinteren
Laufachse entspricht wiederum die Federkraftabgabe zweimal
der kurzen Federarmlänge von 8 t aus 12 t = 16 t.

Alle drei Laufachsen 1, 2, 3 haben nur über die beiden
Anflanschbockpaare 10 und 11 Verbindung zum Chassis, die mittlere
Fahrachse 2 läuft ohne direkte Chassisverbindung. Sie ist lediglich
mit dem vorderen Anflanschbock über die beiden trapezförmig
angeordneten Anlenker 41, 42 verbunden, mit dem bereits geschilderten
Deichseleffekt. Die eigentliche kraftvolle seitliche Führung der
mittleren Fahrachse 2 jedoch übernehmen die dorthin gerichteten
längeren Blattfederenden selbst, die mit der T-förmigen Wiege 28
in Verbindung stehen.

Die bisher beispielslose gute Geländekängigkeit des erfindungsgemäßen Dreiachsaggregates, also der Pendelausgleich der drei
Fahrachsen gegeneinander, ergibt sich durch den Drehpunkt aller
Fahrachsen um die Lagerungen in den Flanschböcken, den Federweg
der Federn selbst und die Verkippmöglichkeit der Verbindungstraverse
an der mittleren Fahrachse.

8

Ansprüche

1. Ungelenktes Dreiachsaggregat nicht angetriebener Fahrzeugachsen für Anhänger und Sattelauflieger, bei dem die vor
bzw. hinter den Laufachsen angeordneten, zur Abstützung
des .Chassis vorgesehenen Anflanschböcke von mit den
Fahrachsen verbundenen Federarmen getragen werden, dadurch
gekennzeichnet, daß zwischen der mittleren Laufachse. (2)
und den beiden endständigen Laufachsen (1,3) zwei Paare
von Anflanschböcken (10a, 10b; 11a, 11b) vorgesehen sind,
daß die Anflanschböcke (10a, 10b; 11a, 11b) im Mittelteil
von zweiarmigen Federungsanordnungen (15a, 15b; 16a, 16b)
gelenkig abgestützt sind und daß die Enden der Federarme (21,24)
mit den benachbarten Laufachsen (1/2; 3/2) in Verbindung
stehen.

2. Dreiachsaggregat nach Anspruch 1, dadurch gekennzeichnet,
daß die Federanordnungen (15a, 15b; 16a, 16b) ungleich
lange Federarme (21, 24) haben, wobei die kurzen Arme (21)
den endständigen Laufachsen (1, 3) und die längeren Arme (24)
der mittleren Laufachse (2) zugewandt sind.

3. Dreiachsaggregat nach Anspruch 1 und 2, dadurch gekennzeichnet, daß bezogen auf ihre Kraftangriffspunkte die Federarme (21, 24) ein Längenverhältnis von 2:1 haben.

4. Dreiachsaggregat nach Anspruch 1 bis 3, dadurch gekennzeichnet,
daß die Federanordnungen (15a, 15b; 161, 16b) asymmetrisch
ausgebildete, Blattfederpakete sind.

9

5. Dreiachsaggregat nach Anspruch 1 bis 4, dadurch gekennzeichnet, daß die mittlere Laufachse (2) links und rechts jeweils eine gelenkig angeschlossene T-förmige Traverse (28) trägt, die über vordere und hintere Federgehänge (26) gelenkig mit den zur Mitte gerichteten Federarmen (24) verbunden ist.

6. Dreiachsaggregat nach Anspruch 1 bis 5, dadurch gekennzeichnet, daß gegenüberliegende Anflanschböcke (10a, 10b; 11a, 11b) mit Quertraversen (12, 13) starr verbunden sind.

7. Dreiachsaggregat nach Anspruch 1 bis 6, dadurch gekennzeichnet, daß die mittlere Laufachse (2) über ein Spurstangenpaar (41, 42) mit mindestens einem der benachbarten Paare von Anflanschböcken (10a, 10b; 11a, 11b) gelenkig verbunden ist.

8. Dreiachsaggregat nach Anspruch 7, dadurch gekennzeichnet, daß die Spurstangen (41, 42) in symmetrischer Anordnung trapezförmig angestellt sind.

1/3      0148305

Fig.1

Fig. 2

## Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-1 467 443 (N.F. WATSON)<br><br>* Seite 3, Zeilen 30-47; Patentansprüche; Figuren 3,4 * | 1-4,6-8 | B 60 G 5/00 |
| X | US-A-3 219 360 (H. SCHWAB)<br><br>* Insgesamt * | 1-4,7,8 | |
| X | DE-A-2 800 799 (G. ROLLFINKE)<br>* Insgesamt * | 1-5 | |
| A | | 7,8 | |
| X | DE-C-1 000 698 (H. SCHWAB)<br>* Insgesamt * | 1-4 | RECHERCHIERTE SACHGEBIETE (Int. Cl.4) |
| A | FR-A-2 403 222 (G.A. MORRIS)<br>* Figuren * | 5-8 | B 60 G |

Der vorliegende Recherchenbericht wurde für alle Patentansprüche erstellt.

| Recherchenort | Abschlußdatum der Recherche | Prüfer |
|---|---|---|
| DEN HAAG | 02-04-1985 | FRANKS B.G. |